# EUROPEAN PATENT APPLICATION

(11) **EP 3 336 791 A1**
(43) Date of publication of application: **20.06.2018**
(21) Application number: 15901018.0
(22) Date of filing: 12.08.2015
(51) Int. Cl.: G06Q 30/02, G06Q 50/10

(54) **SERVER CONTROL METHOD AND CONTROL PROGRAM**

(71) Applicant: Gurunavi, Inc., Tokyo 100-0006 (JP)
(72) Inventor: KUBO, Seiichiro, Tokyo 100-0006 (JP)
(74) Representative: D Young & Co LLP
(86) International application number: PCT/JP2015/072869
(87) International publication number: WO 2017/026064

(57) **Abstract**

A control method and control program for a server, which select an ingredient list of content appropriate for a user that browses a menu item of a dish, are provided. The control method for a server includes: determining whether to use first ingredient name information indicating an official ingredient name in a birthplace of a dish or to use second ingredient name information indicating an ingredient name simplified from an official ingredient name in a birthplace of a dish; setting the first ingredient name information for ingredient list information of a dish that is provided at a facility (22) when it is determined to use the first ingredient name information (21), and setting the second ingredient name information for the ingredient list information (24) when it is determined to use the second ingredient name information (23); and outputting the ingredient list information to a user terminal (25).

## Description

### TECHNICAL FIELD

The invention relates to a control method and control program for a server.

### BACKGROUND ART

Conventionally, a server translates a menu item of a dish that is provided at a facility, such as a restaurant, into the languages of countries and distributes the translated menu items of the dish to user terminals.

For example, Patent Literature 1 describes that a management device transmits a menu item of a dish and a list of ingredients of the dish to terminals in the languages of various countries.

### CITATION LIST

### PATENT LITERATURE

Patent Literature 1: Japanese Patent Application Publication No. 2015-49763 (JP 2015-049763 A)

### SUMMARY OF THE INVENTION

In Patent Literature 1, a menu item of a dish and the ingredients of the dish, which are transmitted to terminals, are those obtained by directly translating a menu item of the dish and the ingredients of the dish, which are used in a country in which the dish is provided, into another language. However, ingredients included in the dish vary depending on the food culture of each region or country, so there are a large number of ingredients that are used only in the birthplace of the dish and are not used in places other than the birthplace of the dish. In this case, because a menu item of a dish and a list of ingredients of the dish are too specific for tourists coming from places other than the birthplace of the dish, the tourists coming from places other than the birthplace may not understand the menu item of the dish or the list of ingredients of the dish.

The invention is contemplated in order to solve such an inconvenience, and it is an object of the invention to provide a control method and control program for a server, which select a list of ingredients appropriate for a user that browses a menu item of a dish.

In addition, it is an object of the invention to provide a control method and control program for a server, which select a list of ingredients appropriate for an administrator that registers a menu item of a dish.

A control method for a server according to the invention is a control method for a server including a storage unit. The control method includes: storing first ingredient name information and second ingredient name information in the storage unit in association with each other, the first ingredient name information indicating an official ingredient name of at least one ingredient included in a dish in a birthplace of the dish, the second ingredient name information indicating an ingredient name simplified from an official ingredient name of at least one ingredient included in a dish in a birthplace of the dish; determining whether to use the first ingredient name information or to use the second ingredient name information for an accessing user terminal; setting the first ingredient name information for ingredient list information of a dish that is provided at a facility when it is determined to use the first ingredient name information, and setting the second ingredient name information for the ingredient list information when it is determined to use the second ingredient name information; and outputting the ingredient list information to the user terminal.

A control program for a server according to the invention is a control program for a server including a storage unit. The control program causes the server to execute: storing first ingredient name information and second ingredient name information in the storage unit in association with each other, the first ingredient name information indicating an official ingredient name of at least one ingredient included in a dish in a birthplace of the dish, the second ingredient name information indicating an ingredient name simplified from an official ingredient name of at least one ingredient included in a dish in a birthplace of the dish; determining whether to use the first ingredient name information or to use the second ingredient name information for an accessing user terminal; setting the first ingredient name information for ingredient list information of a dish that is provided at a facility when it is determined to use the first ingredient name information, and setting the second ingredient name information for the ingredient list information when it is determined to use the second ingredient name information; and outputting the ingredient list information to the user terminal.

A control method for a server according to the invention is a control method for a server including a storage unit. The control method includes: storing first ingredient name information and second ingredient name information in the storage unit in association with each other, the first ingredient name information indicating an official ingredient name of at least one ingredient included in a dish in a birthplace of the dish, the second ingredient name information indicating an ingredient name simplified from an official ingredient name of at least one ingredient included in a dish in a birthplace of the dish; determining whether to use the first ingredient name information or to use the second ingredient name information for an accessing input terminal; setting the first ingredient name information for ingredient list information of a dish that is provided at a facility when it is determined to use the first ingredient name information, and setting the second ingredient name information for the ingredient list information when it is determined to use the second ingredient name information; and outputting the ingredient list information to the input terminal.

A control program for a server according to the invention is a control program for a server including a storage unit. The control program causes the server to execute: storing first ingredient name information and second ingredient name information in the storage unit in association with each other, the first ingredient name information indicating an official ingredient name of at least one ingredient included in a dish in a birthplace of the dish, the second ingredient name information indicating an ingredient name simplified from an official ingredient name of at least one ingredient included in a dish in a birthplace of the dish; determining whether to use the first ingredient name information or to use the second ingredient name information for an accessing input terminal; setting the first ingredient name information for ingredient list information of a dish that is provided at a facility when it is determined to use the first ingredient name information, and setting the second ingredient name information for the ingredient list information when it is determined to use the second ingredient name information; and outputting the ingredient list information to the input terminal.

### ADVANTAGEOUS EFFECTS OF THE INVENTION

With the control method and control program for a server according to the invention, it is possible to select an ingredient list of content appropriate for a user that browses a menu item of a dish.

With the control method and control program for a server according to the invention, it is possible to select an ingredient list of content appropriate for an administrator that registers a menu item of a dish.

### BRIEF DESCRIPTION OF THE DRAWINGS

[FIG. 1A] FIG. 1A is a schematic view for illustrating the outline of a distribution system 1 at the time when a dish menu item is registered.
[FIG. 1B] FIG. 1B is a schematic view for illustrating the outline of the distribution system 1 at the time when a dish menu item is distributed.
[FIG. 2] FIG. 2 is a view that shows an example of the schematic configuration of the distribution system 1.
[FIG. 3] FIG. 3 is a view that shows an example of the schematic configuration of a server 4.
[FIG. 4A] FIG. 4A is a view that shows an example of the data structure of a dish management table.
[FIG. 4B] FIG. 4B is a view that shows an example of the data structure of a first ingredient management table.
[FIG. 5] FIG. 5 is a view that shows an example of the data structure of a second ingredient management table.
[FIG. 6] FIG. 6 is a view that shows an example of the data structure of a dish menu item management table.
[FIG. 7] FIG. 7 is a view that shows an example of the flowchart of a dish menu item registration process that is executed by the server 4.
[FIG. 8] FIG. 8 is a view that shows an example of the flowchart of a dish menu item distribution process that is executed by the server 4.
[FIG. 9A] FIG. 9A is a view that shows an example of a dish menu item checking page on a facility terminal 2.
[FIG. 9B] FIG. 9B is a view that shows an example of a dish menu item checking page on the facility terminal 2.
[FIG. 10A] FIG. 10A is a view that shows an example of a dish menu item distribution page on a user terminal 3.
[FIG. 10B] FIG. 10B is a view that shows an example of a dish menu item distribution page on the user terminal 3.
[FIG. 11A] FIG. 11A is a view that shows an example of the data structure of another dish management table.
[FIG. 11B] FIG. 11B is a view that shows an example of the data structure of another first ingredient management table.
[FIG. 12] FIG. 12 is a view that shows an example of the data structure of another second ingredient management table.
[FIG. 13] FIG. 13 is a view that shows an example of the data structure of another dish menu item management table.
[FIG. 14] FIG. 14 is a view that shows an example of the flowchart of another dish menu item registration process that is executed by the server 4.
[FIG. 15] FIG. 15 is a view that shows an example of the flowchart of another dish menu item distribution process that is executed by the server 4.
[FIG. 16A] FIG. 16A is a view that shows an example of the data structure of another dish menu item management table.
[FIG. 16B] FIG. 16B is a view that shows an example of the data structure of a facility management table.
[FIG. 17] FIG. 17 is a view that shows an example of a selection page on the facility terminal 2 or the user terminal 3.

### MODES FOR CARRYING OUT THE INVENTION

### First Embodiment

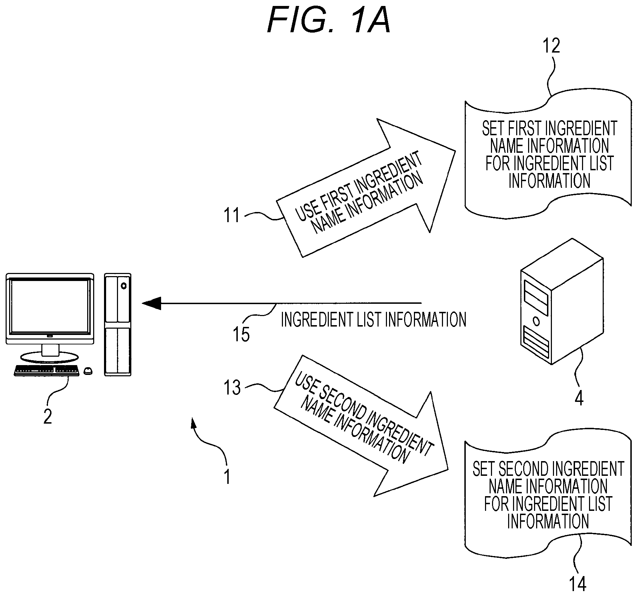

FIG. 1A is a schematic view for illustrating the outline of a distribution system 1 at the time when a dish menu item is registered.

The distribution system 1 includes a facility terminal 2, a server 4, and the like. The facility terminal 2 is located at a facility. The facility terminal 2 is an example of an input terminal to which a menu item of a dish is registered and input. A personal computer (PC) is assumed as the facility terminal 2; however, the facility terminal 2 is not limited to the personal computer. The facility terminal 2 may be any device as long as the invention is applicable to the device. For example, the facility terminal 2 may be a multifunctional mobile phone (so-called smartphone), a mobile phone (so-called feature phone), a mobile information terminal (personal digital assistant (PDA)), a tablet PC, or the like. The facility is an eating place, such as a restaurant that provides a dish, or an accommodation facility, such as a hotel.

Initially, the server 4 determines whether to use first ingredient name information or to use second ingredient name information. The first ingredient name information indicates an official ingredient name in the birthplace of a dish. The second ingredient name information indicates an ingredient name simplified from an official ingredient name in the birthplace of a dish. When the server 4 determines to use the first ingredient name information (11), the server 4 sets the first ingredient name information of ingredients included in a dish for ingredient list information that indicates a list of ingredients included in a dish that is provided at a facility (12). The ingredient names of all the ingredients included in a dish do not need to be contained in the first ingredient name information. The ingredient name of at least one ingredient included in a dish just needs to be contained in the first ingredient name information.

On the other hand, when the server 4 determines to use the second ingredient name information (13), the server 4 sets the second ingredient name information of ingredients included in a dish for the ingredient list information (14). The ingredient names of all the ingredients included in a dish do not need to be contained in the second ingredient name information. The ingredient name of at least one ingredient included in a dish just needs to be contained in the second ingredient name information.

Subsequently, the server 4 outputs the set ingredient list information to the facility terminal 2 (15). The facility terminal 2 displays the ingredient list information output from the server 4. The administrator of the facility terminal 2 browses the ingredient list information displayed on the facility terminal 2, and registers a dish menu item that the facility provides on the basis of the ingredients shown by the displayed ingredient list information.

In this way, when the server 4 determines to use the first ingredient name information, the server 4 sets the first ingredient name information for the ingredient list information; whereas, when the server 4 determines to use the second ingredient name information, the server 4 sets the second ingredient name information for the ingredient list information. Thus, the server 4 is able to select an ingredient list of content appropriate for the administrator of the facility terminal 2 that provides a menu item of a dish.

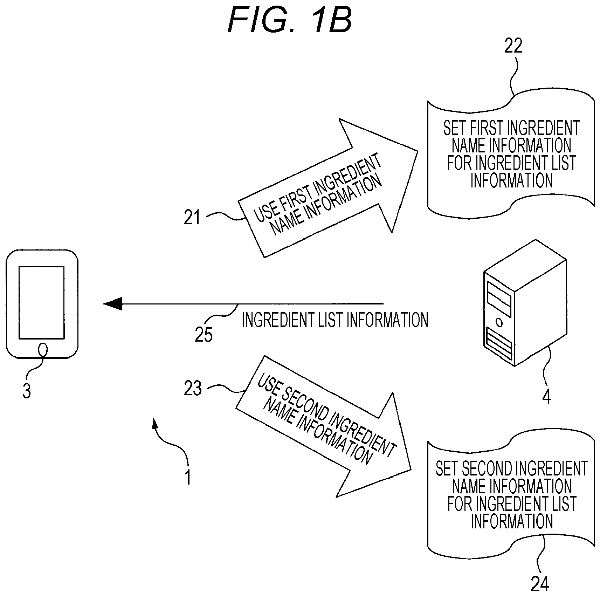

FIG. 1B is a schematic view for illustrating the outline of the distribution system 1 at the time when a dish menu item is distributed.

The distribution system 1 includes a user terminal 3, the server 4, and the like. The user terminal 3 is a terminal that a user uses. A multifunctional mobile phone is assumed as the user terminal 3; however, the user terminal 3 is not limited to the multifunctional mobile phone. The user terminal 3 may be any device as long as the invention is applicable to the device. For example, the user terminal 3 may be a mobile phone, a mobile information terminal, a tablet PC, a personal computer, or the like.

Initially, the server 4 determines whether to use first ingredient name information or to use second ingredient name information. The first ingredient name information indicates an official ingredient name in the birthplace of a dish. The second ingredient name information indicates an ingredient name simplified from an official ingredient name in the birthplace of a dish. When the server 4 determines to use the first ingredient name information (21), the server 4 sets the first ingredient name information of ingredients included in a dish for ingredient list information (22).

On the other hand, when the server 4 determines to use the second ingredient name information (23), the server 4 sets the second ingredient name information that indicates the ingredient names of ingredients included in a dish for the ingredient list information (24).

Subsequently, the server 4 outputs the set ingredient list information to the user terminal 3 (25). The user terminal 3 displays the ingredient list information output from the server 4. The user of the user terminal 3 browses the ingredient list information displayed on the user terminal 3.

In this way, when the server 4 determines to use the first ingredient name information, the server 4 sets the first ingredient name information for the ingredient list information; whereas, when the server 4 determines to use the second ingredient name information, the server 4 sets the second ingredient name information for the ingredient list information. Thus, it is possible to select an ingredient list of content appropriate for the user of the user terminal 3, with which a menu item of a dish is browsed.

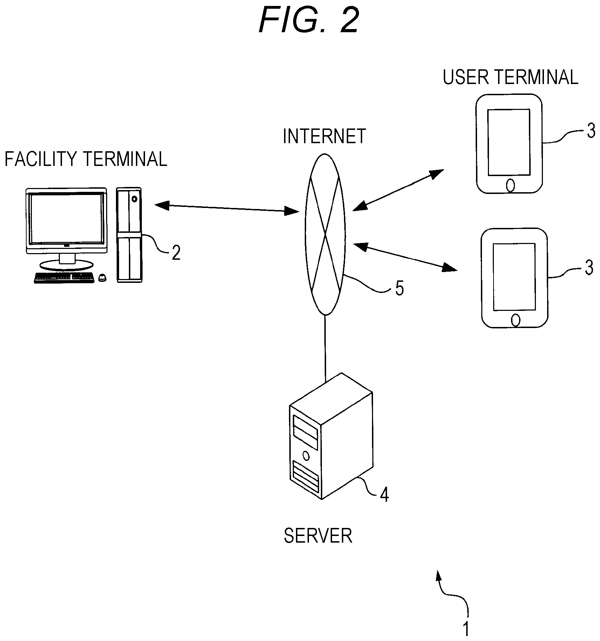

FIG. 2 is a view that shows an example of the schematic configuration of the distribution system 1.

The distribution system 1 includes at least one facility terminal 2, at least one user terminal 3 and the server 4. The facility terminal 2 and the server 4 are connected to each other via a communication network, and are, for example, connected to each other via the Internet 5. The facility terminal 2 and the server 4 carry out communication with each other by using a communication protocol, such as a hypertext transfer protocol (HTTP). The user terminal 3 and the server 4 are connected to each other via a communication network, and are, for example, connected to each other via the Internet 5. The user terminal 3 and the server 4 carry out communication by using a communication protocol, such as a hypertext transfer protocol.

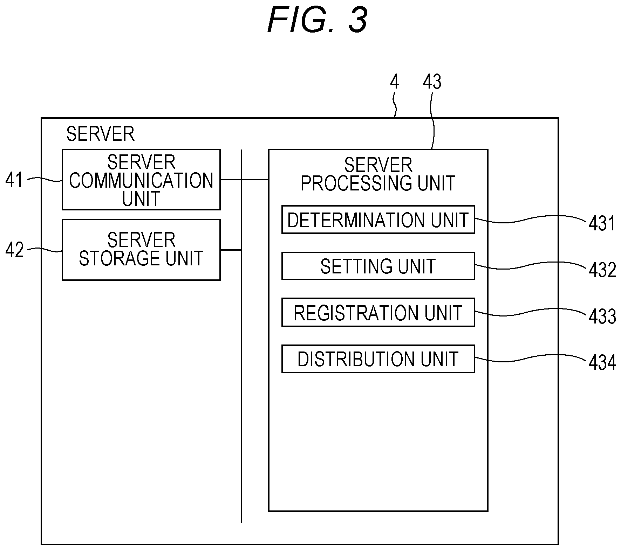

FIG. 3 is a view that shows an example of the schematic configuration of the server 4.

The server 4 includes a server communication unit 41, a server storage unit 42 and a server processing unit 43. The server 4 is made up of a single device. The server 4 may be made up of a plurality of devices.

The server communication unit 41 includes a communication interface circuit for transmitting or receiving data via the Internet 5, and carries out communication with the facility terminal 2 or the user terminal 3.

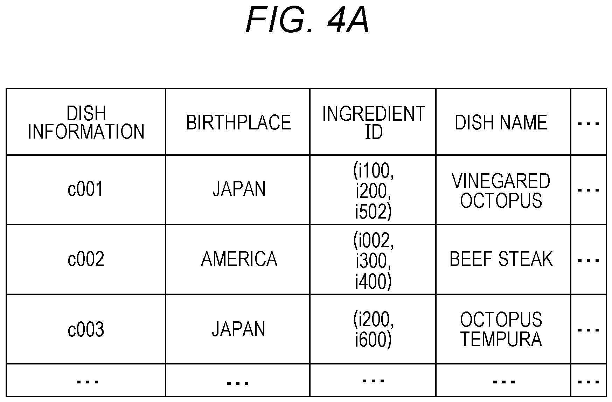

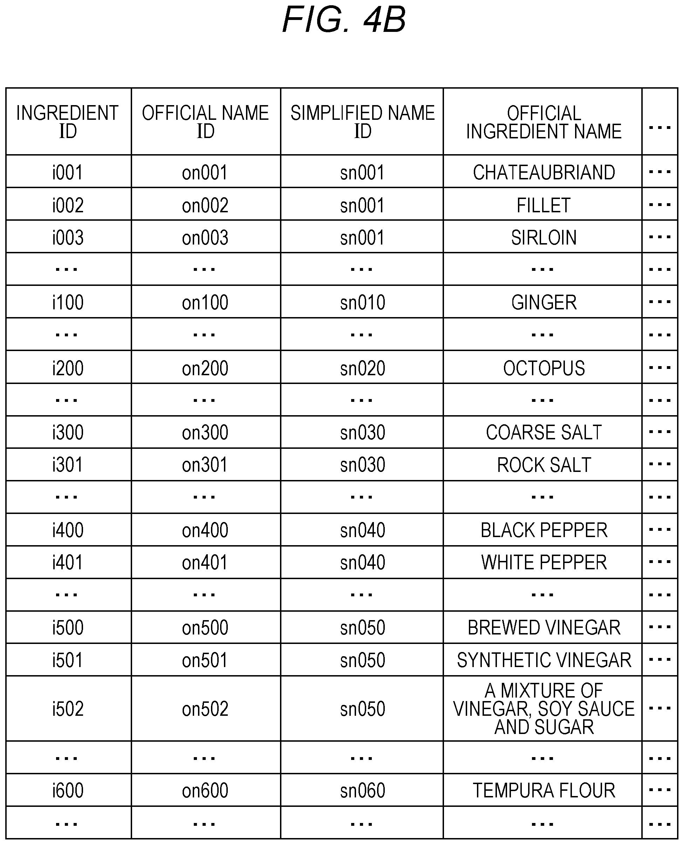

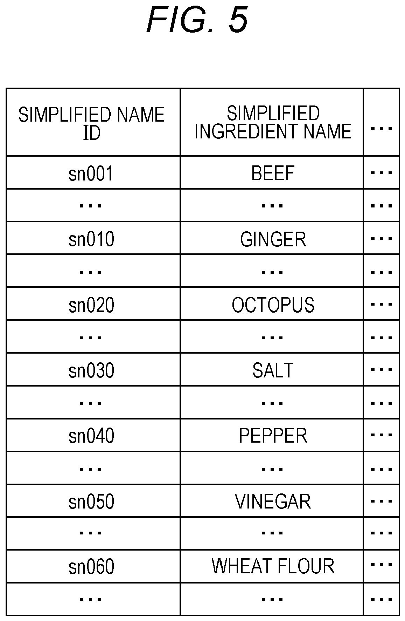

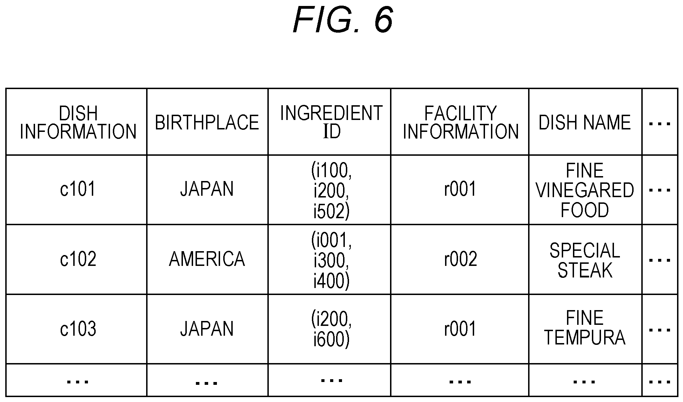

The server storage unit 42 includes, for example, at least any one of a magnetic tape drive, a magnetic disk drive and an optical disk drive. The server storage unit 42 stores an operating system program, a driver program, an application program, data, and the like, that are used for processing in the server processing unit 43. The server storage unit 42 stores a dish management table (FIG. 4A), a first ingredient management table (FIG. 4B), a second ingredient management table (FIG. 5) and a dish menu item management table (FIG. 6) as the data. The server storage unit 42 further includes a buffer for temporarily storing temporary data regarding predetermined processing.

The server processing unit 43 includes a determination unit 431, a setting unit 432, a registration unit 433, a distribution unit 434, and the like. The server processing unit 43 generally controls the overall operations of the server 4. The server processing unit 43 consists of one or plurality of processors and their peripheral circuit (for example, central processing unit (CPU)). The server processing unit 43 controls the operations of the server communication unit 41, and the like, in an appropriate procedure on the basis of the programs (the operating system program, the driver program, the application program, and the like) that are stored in the server storage unit 42. In addition, the server processing unit 43 may execute a plurality of programs (application programs, or the like) in parallel.

The determination unit 431, the setting unit 432, the registration unit 433 and the distribution unit 434 are functional modules that are implemented by programs that are executed by the processor(s) of the server processing unit 43. The determination unit 431, the setting unit 432, the registration unit 433 and the distribution unit 434 may be implemented in the server 4 as firmware.

The determination unit 431 determines whether to use the first ingredient name information or to use the second ingredient name information for an accessing user terminal. The details of processing of the determination unit 431 will be described later.

When it is determined to use the first ingredient name information, the setting unit 432 sets the first ingredient information for the ingredient list information. When it is determined to use the second ingredient name information, the setting unit 432 sets the second ingredient name information for the ingredient list information. The details of processing of the setting unit 432 will be described later.

The registration unit 433 registers a dish menu item of a facility on the basis of the ingredient list information set by the setting unit 432 in accordance with administrator's operation. The details of processing of the registration unit 433 will be described later.

The distribution unit 434 distributes, to the user terminal 3, the ingredient list information of a dish that is provided at a facility. The details of processing of the distribution unit 434 will be described later.

FIG. 4A is a view that shows an example of the data structure of the dish management table.

The data structure shown in FIG. 4A provides multiple series of data associated with pieces of dish information and stored in the server storage unit 42. The series of data includes, for example, a birthplace, an ingredient ID that is identification information of each ingredient included in a dish, a dish name, and the like. The above-described series of data is one example, and may include another piece of information regarding a dish. The birthplace means a region of the birth of a dish. A birthplace is associated with a dish that is provided at a facility. The dish information is, for example, identification information for uniquely identifying a dish.

FIG. 4B is a view that shows an example of the data structure of the first ingredient management table.

The data structure shown in FIG. 4B provides multiple series of data associated with ingredient IDs and stored in the server storage unit 42. The series of data includes, for example, an official name ID that is identification information of an official name of an ingredient, a simplified name ID that is identification information of a name simplified from an official name of an ingredient, an official ingredient name, and the like. The above-described series of data is one example, and may include another piece of information regarding an ingredient. The official ingredient name is an example of the first ingredient name information, and means an official name of an ingredient included in a dish in the birthplace of the dish. The official ingredient name also includes an official name of a seasoning included in a dish in the birthplace of the dish.

FIG. 5 is a view that shows an example of the data structure of the second ingredient management table.

The data structure shown in FIG. 5 provides multiple series of data associated with simplified name IDs stored in the server storage unit 42. The series of data includes, for example, a simplified ingredient name, and the like. The above-described series of data is one example, and may include another piece of information regarding an ingredient. The simplified ingredient name is an example of the second ingredient name information, and means a name simplified from an official name of an ingredient included in a dish in the birthplace of the dish. The simplified ingredient name also includes a name simplified from an official name of a seasoning included in a dish in the birthplace of the dish.

"Chateaubriand", "fillet", "sirloin", and the like, are known in America as parts of beef. These parts of beef have a significant influence on price and taste when a dish is steak. However, tourists coming from countries in which people rarely eat beef may not understand parts of beef, such as "chateaubriand", "fillet" and "sirloin". Therefore, for example, "beef" is used as a simplified ingredient name of "chateaubriand", "fillet" and "sirloin".

"Brewed vinegar", "synthetic vinegar", "a mixture of vinegar, soy sauce and sugar", and the like, are known in Japan as kinds of vinegar. However, tourists from countries other than Japan may not understand kinds of vinegar, such as "brewed vinegar", "synthetic vinegar" and "a mixture of vinegar, soy sauce and sugar". Therefore, for example, "vinegar" is used as a simplified ingredient name of "brewed vinegar", "synthetic vinegar" and "a mixture of vinegar, soy sauce and sugar".

FIG. 6 is a view that shows an example of the data structure of the dish menu item management table.

The data structure shown in FIG. 6 provides multiple series of data associated with pieces of dish information, each corresponding to a dish menu item that is individually provided at each facility, and stored in the server storage unit 42. The series of data includes, for example, a birthplace, an ingredient ID of each ingredient included in a dish, facility information of a facility that provides a dish, a dish name, and the like. The above-described series of data is one example, and may include another pieces of information regarding a dish menu item. The facility information is, for example, identification information for uniquely identifying a facility. The dish name is the name of a dish, specified by the administrator of the facility terminal 2. A birthplace is associated with a dish that is provided at a facility.

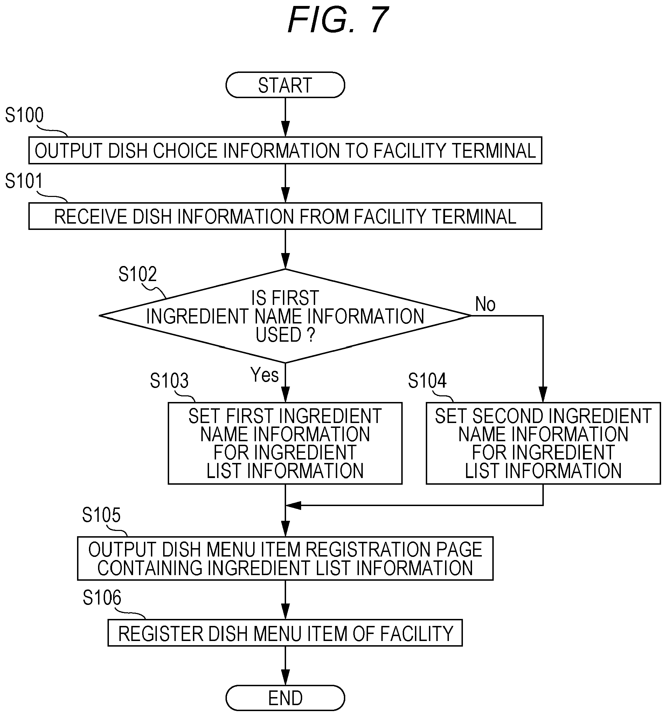

FIG. 7 is a view that shows an example of the flowchart of a dish menu item registration process that is executed by the server 4.

The procedure described in the flowchart shown in FIG. 7 is executed by programs prepared in advance and stored in the server storage unit 42 of the server 4.

Initially, as the facility terminal 2 accesses the server 4 in response to administrator's operation, the determination unit 431 of the server 4 outputs dish choice information to the facility terminal 2 (step S100). The dish choice information is information for selectively displaying a plurality of dishes.

Subsequently, the facility terminal 2 displays the dish choice information output from the server 4. As a dish that is provided at the facility is selected through administrator's operation from among the plurality of dishes displayed, the facility terminal 2 transmits dish information indicating the selected dish to the server 4 together with the terminal information of the facility terminal 2. The determination unit 431 of the server 4 receives the dish information and the terminal information of the facility terminal 2 from the facility terminal 2 (step S101).

Subsequently, the determination unit 431 determines whether to use the first ingredient name information or to use the second ingredient name information (step S102). Initially, the determination unit 431 consults the dish management table, and identifies the birthplace associated with the received dish information. Subsequently, the determination unit 431 identifies the country in which the facility terminal 2 is located on the basis of the terminal information of the facility terminal 2. The terminal information of the facility terminal 2 is, for example, the IP address of the facility terminal 2. Subsequently, the determination unit 431 determines whether the accessing facility terminal 2 is located in the birthplace on the basis of whether the identified birthplace and country coincide with each other. Subsequently, the determination unit 431 determines to use the first ingredient name information when the accessing facility terminal 2 is located in the birthplace, and determines to use the second ingredient name information when the accessing facility terminal 2 is not located in the birthplace.

In this way, the determination unit 431 determines whether to use the first ingredient name information or to use the second ingredient name information by determining whether the facility terminal 2 is located in the birthplace associated with the received dish information.

When it is determined in step S102 to use the first ingredient name information, the setting unit 432 sets the first ingredient name information for the ingredient list information (step S103). The ingredient list information indicates a list of ingredients included in a dish that is provided at the facility. The setting unit 432 consults the dish management table, and identifies the ingredient IDs of ingredients included in the dish indicated by the received dish information. Subsequently, the setting unit 432 consults the first ingredient management table, and identifies official ingredient names associated with the identified ingredient IDs. Subsequently, the setting unit 432 uses the first ingredient name information for the identified official ingredient names, and sets the first ingredient name information for the ingredient list information.

On the other hand, in step S102, when it is determined not to use the first ingredient name information but to use the second ingredient name information, the setting unit 432 sets the second ingredient name information for the ingredient list information (step S104). The setting unit 432 consults the dish management table, and identifies the ingredient IDs of the ingredients included in the dish indicated by the received dish information. Subsequently, the setting unit 432 consults the first ingredient management table, and identifies simplified name IDs associated with the identified ingredient IDs. Subsequently, the setting unit 432 consults the second ingredient management table, and identifies simplified ingredient names associated with the identified simplified name IDs. Subsequently, the setting unit 432 uses the identified simplified ingredient names as the second ingredient name information, and sets the second ingredient name information for the ingredient list information.

Subsequently, the registration unit 433 outputs, to the facility terminal 2, a dish menu item checking page containing the ingredient list information set in step S103 or step S104 (step S105). The facility terminal 2 displays the dish menu item checking page output from the server 4.

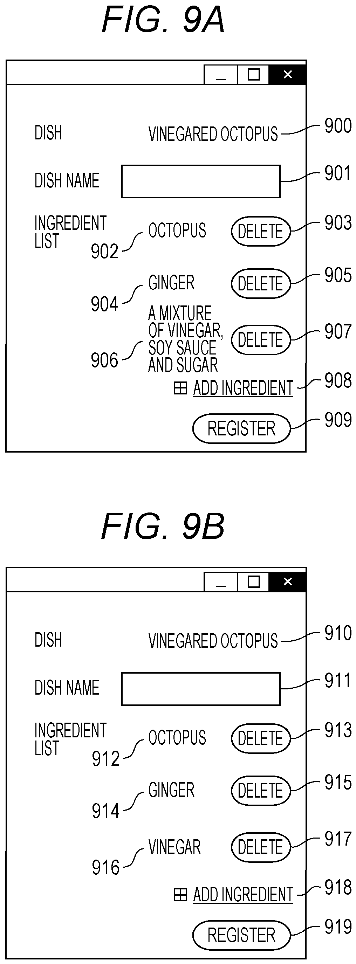

FIG. 9A is a view that shows an example of the dish menu item checking page that is displayed on the facility terminal 2 located in a birthplace.

The dish menu item registration page shown in FIG. 9A is a page that the administrator of the facility terminal 2 registers a dish menu item of a dish that each facility provides while browsing the ingredient list information set in step S103. A dish 900, an input box 901, ingredients 902, 904, 906, delete buttons 903, 905, 907, an addition button 908, a registration button 909, and the like, are displayed on the dish menu item registration page shown in FIG. 9A.

A dish name corresponding to the dish information received by the server 4 in step S101 is displayed as the dish 900. The input box 901 is an area for inputting the dish name of a dish that the facility provides. The administrator is allowed to specify a facility's own dish name with the use of the input box 901. Ingredient names indicated by the first ingredient name information set for the ingredient list information in step S103 are respectively shown as the ingredients 902, 904, 906. The delete buttons 903, 905, 907 are buttons for respectively deleting the ingredients 902, 904, 906 from a dish menu item of a dish that the facility provides. The administrator is allowed to specify an ingredient to be deleted from the dish menu item by depressing the delete button. The addition button 908 is a button for displaying a page (not shown) for adding an ingredient not contained in the ingredient list information set in step S103 to the dish menu item of a dish that the facility provides. The administrator is allowed to specify an ingredient to be added to the dish menu item by using the page that is displayed by depressing the addition button 908. The registration button 909 is a button for registering a dish menu item.

FIG. 9B is a view that shows an example of the dish menu item checking page that is displayed on the facility terminal 2 located in a place other than a birthplace. The place other than a birthplace is all the region other than the birthplace associated with a dish.

A dish 910, an input box 911, ingredients 912, 914, 916, delete buttons 913, 915, 917, an addition button 918, a registration button 919, and the like, are displayed on the dish menu item registration page shown in FIG. 9B, as well as the dish menu item registration page shown in FIG. 9A. However, ingredient names indicated in the second ingredient name information set for the ingredient list information in step S104 are respectively shown as the ingredients 912, 914, 916. In this example, "octopus" and "ginger" are shown as the ingredients 912, 914, as well as the ingredients 902, 904; however, not the official ingredient name "a mixture of vinegar, soy sauce and sugar" shown in the ingredient 906 but the simplified ingredient name "vinegar" is shown as the ingredient 916.

In this way, the registration unit 433 outputs a different dish menu item checking page to the facility terminal 2 in response to whether the facility terminal 2 is located in a birthplace. Thus, the administrator of the facility terminal 2 that has accessed from the birthplace is allowed to browse an ingredient list in official ingredient name, and the administrator of the facility terminal 2 that has accessed from a place other than the birthplace is allowed to browse an ingredient list in simplified ingredient name. Since a place other than the birthplace is all the region other than the birthplace associated with a dish, the server 4 is allowed to use a simplified ingredient name again and again when the server 4 has been accessed from a place other than the birthplace.

Subsequently, as the registration button 909 is depressed through administrator's operation, the registration unit 433 of the server 4 registers the dish menu item (step S106). As the registration button 909 is depressed through administrator's operation, the facility terminal 2 transmits the dish name specified on the dish menu item registration page, the ingredient ID of an ingredient to be deleted from the dish menu item, and the ingredient ID of an ingredient to be added to the dish menu item, to the server 4 together with facility information allocated to the facility. As the pieces of information are received from the facility terminal 2, the registration unit 433 of the server 4 allocates dish information to the dish menu item that is newly registered, and stores the dish information in the dish menu item management table in association with the received dish name and facility information. Furthermore, the registration unit 433 reads the birthplace and ingredient IDs, corresponding to the dish information received by the server 4 in step S101, from the dish management table, and updates the read ingredient IDs with the ingredient IDs received from the facility terminal 2. The registration unit 433 stores the read birthplace and the updated ingredient IDs in the dish menu item management table in association with the allocated dish information.

In this way, the setting unit 432 sets the first ingredient name information for the ingredient list information when the facility terminal 2 located in a birthplace has accessed. The setting unit 432 sets the second ingredient name information for the ingredient list information when the facility terminal 2 located in a place other than the birthplace has accessed. Thus, the setting unit 432 is able to set the ingredient list information of content appropriate for the administrator of the facility terminal 2 that provides a menu item of a dish.

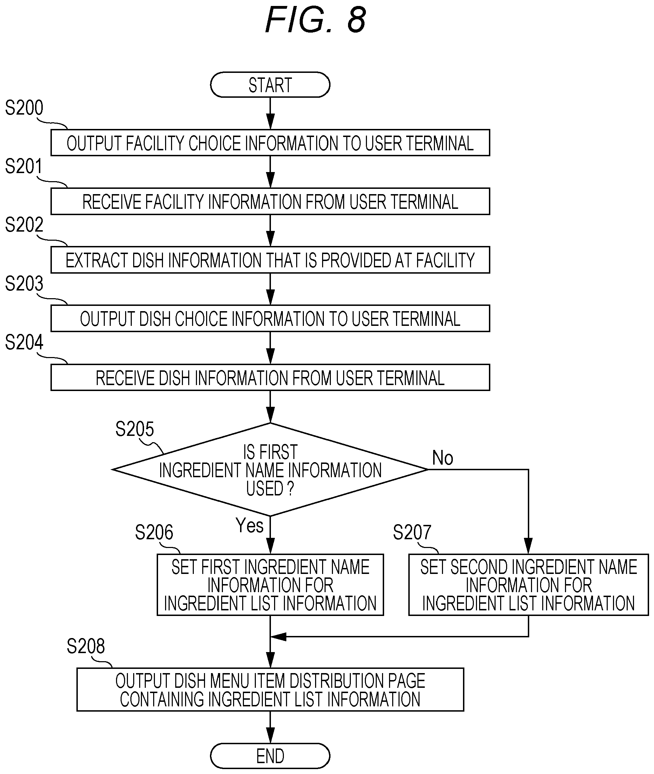

FIG. 8 is a view that shows an example of the flowchart of a dish menu item distribution process that is executed by the server 4.

The procedure described in the flowchart shown in FIG. 8 is executed by programs prepared in advance and stored in the server storage unit 42 of the server 4.

Initially, as the user terminal 3 accesses the server 4 through user's operation, the determination unit 431 of the server 4 outputs facility choice information to the accessing user terminal 3 (step S200). The facility choice information is information for selectively displaying a plurality of facilities.

Subsequently, the user terminal 3 displays the facility choice information output from the server 4. As a facility of which the ingredient list information is browsed is selected from among the plurality of displayed facilities through user's operation, the user terminal 3 transmits facility information indicating the selected facility to the server 4 together with the terminal information of the user terminal 3. The determination unit 431 of the server 4 receives the facility information and the terminal information of the user terminal 3 from the accessing user terminal 3 (step S201).

Subsequently, the determination unit 431 extracts pieces of dish information, corresponding to all the dishes that are provided at the facility indicated in the received facility information, from the dish menu item management table (step S202).

The setting unit 432 outputs the dish choice information to the user terminal 3 (step S203). The dish choice information is information for selectively displaying the plurality of dishes extracted in step S202.

Subsequently, the user terminal 3 displays the dish choice information output from the server 4. As a dish of which the ingredient list information is browsed is selected from among the plurality of displayed dishes through user's operation, the user terminal 3 transmits dish information indicating the selected dish to the server 4. The determination unit 431 of the server 4 receives the dish information from the user terminal 3 (step S204).

Subsequently, the determination unit 431 determines whether to use the first ingredient name information or to use the second ingredient name information (step S205). As in the case of the process of step S102 of FIG. 7, the determination unit 431 consults the dish menu item management table and identifies a birthplace associated with each piece of dish information. The determination unit 431 determines whether to use the first ingredient name information or to use the second ingredient name information by determining whether the user terminal 3 is located in the identified birthplace.

When it is determined in step S205 to use the first ingredient name information, the setting unit 432 sets the first ingredient name information for the ingredient list information (step S206). As in the case of the process of step S103 of FIG. 7, the setting unit 432 consults the dish menu item management table and the first ingredient management table, identifies the official ingredient names of the ingredient IDs corresponding to the dish information, and sets the official ingredient names for the ingredient list information.

On the other hand, when it is determined in step S205 not to use the first ingredient name information but to use the second ingredient name information, the setting unit 432 sets the second ingredient name information for the ingredient list information (step S207). As in the case of the process of step S104 of FIG. 7, the setting unit 432 consults the dish menu item management table, the first ingredient management table and the second ingredient management table, identifies the simplified ingredient names of the ingredient IDs corresponding to the dish information, and sets the simplified ingredient names for the ingredient list information.

Subsequently, the distribution unit 434 outputs a dish menu item distribution page containing the set ingredient list information to the user terminal 3 (step S208). The facility terminal 2 displays the dish menu item distribution page output from the server 4.

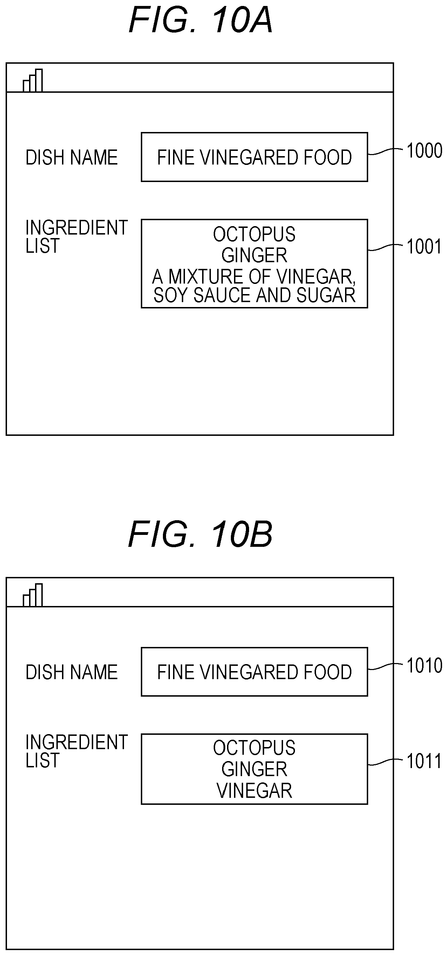

FIG. 10A is a view that shows an example of the dish menu item distribution page that is displayed on the user terminal 3 located in a birthplace.

The dish menu item distribution page shown in FIG. 10A contains a dish 1000 and ingredients 1001 included in the dish for each dish that is provided at a facility. The dish name corresponding to the dish information received in step S204 is displayed as the dish 1000. The ingredient names indicated by the first ingredient name information set for the ingredient list information in step S206 are displayed as the ingredients 1001.

FIG. 10B is a view that shows an example of the dish menu item distribution page that is displayed on the user terminal 3 located in a place other than a birthplace.

The dish menu item distribution page shown in FIG. 10B, as well as the dish menu item distribution page shown in FIG. 10A, contains a dish name 1010 and ingredients 1011 included in the dish for each dish that is provided at a facility. However, the ingredient names indicated by the second ingredient name information set for the ingredient list information in step S207 are displayed as the ingredients 1011. In this example, not the official ingredient name "a mixture of vinegar, soy sauce and sugar" displayed in the ingredients 1001 but the simplified ingredient name "vinegar" is displayed as the ingredients 1011.

In this way, the distribution unit 434 outputs a different dish menu item distribution page to the user terminal 3 in response to whether the user terminal 3 is located in a birthplace. Thus, the user of the user terminal 3 that has accessed from a birthplace is allowed to browse an ingredient list in official ingredient name, and the user of the user terminal 3 that has accessed from a place other than the birthplace is allowed to browse an ingredient list in simplified ingredient name. Since a place other than the birthplace is all the region other than the birthplace associated with a dish, the server 4 is allowed to use a simplified ingredient name again and again when the server 4 has been accessed from a place other than the birthplace.

As described above, when the user terminal 3 located in a birthplace has accessed, the setting unit 432 of the server 4 sets the first ingredient name information for the ingredient list information. When the user terminal 3 located in a place other than the birthplace has accessed, the setting unit 432 sets the second ingredient name information for the ingredient list information. Thus, the setting unit 432 is able to set the ingredient list information of content appropriate for the user of the user terminal 3, with which a menu item of a dish is browsed.

### Second Embodiment

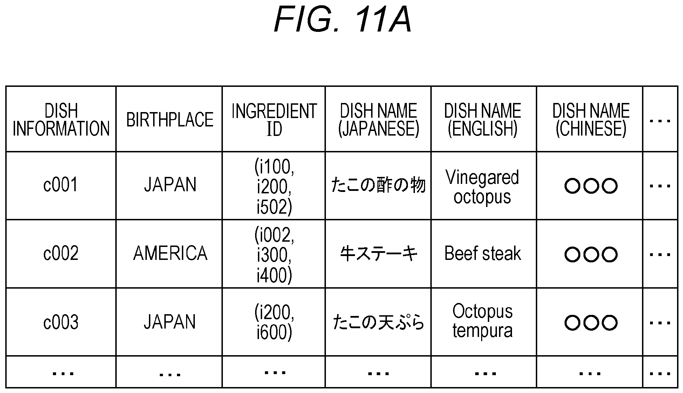

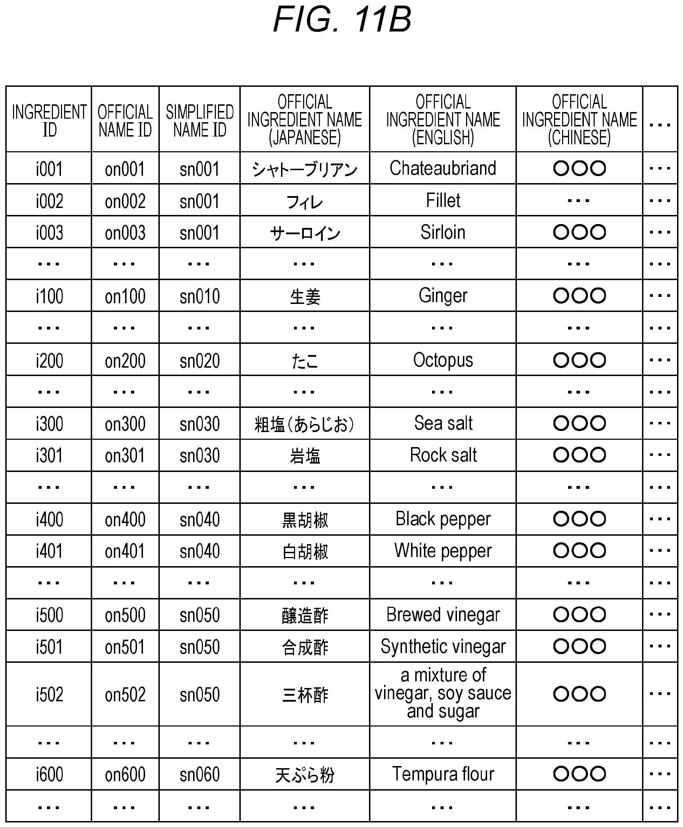

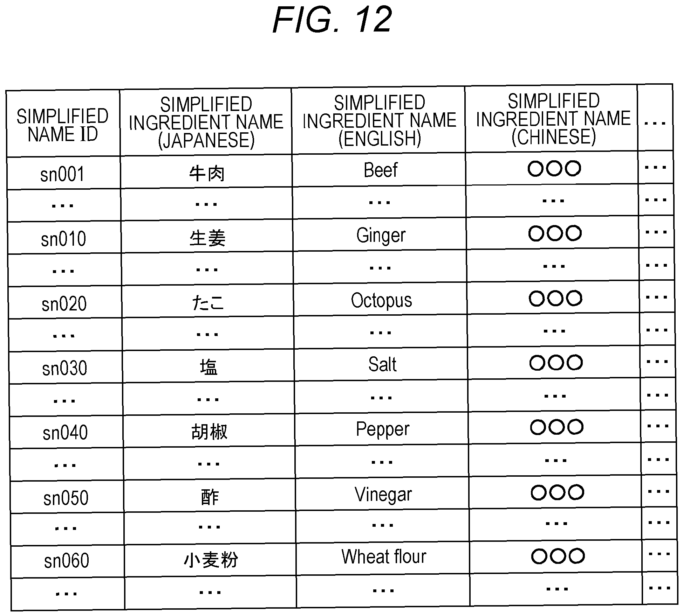

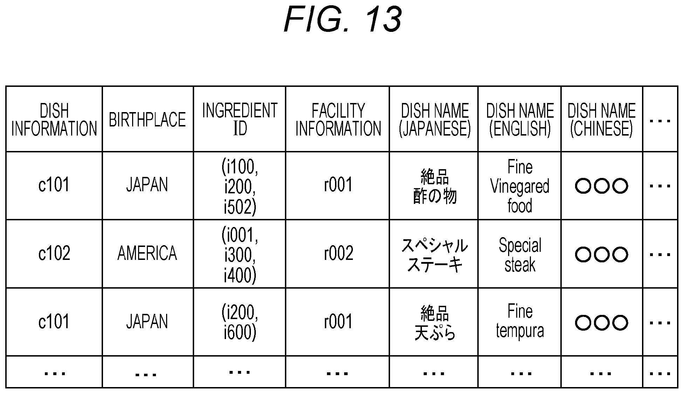

The second embodiment describes the case where first ingredient name information and second ingredient name information are translated into multiple languages in advance. The configuration of the distribution system 1 in the second embodiment is similar to the configuration of the distribution system 1 in the first embodiment. However, the server 4 stores dish names and ingredient names, translated into multiple languages, in the server storage unit 42. That is, the server 4 stores a dish management table shown in FIG. 11A in the server storage unit 42 instead of the dish management table shown in FIG. 4A. The server 4 stores a first ingredient management table shown in FIG. 11B in the server storage unit 42 instead of the first ingredient management table shown in FIG. 4B. The server 4 stores a second ingredient management table shown in FIG. 12 in the server storage unit 42 instead of the second ingredient management table shown in FIG. 5. The server 4 stores a dish menu item management table shown in FIG. 13 in the server storage unit 42 instead of the dish menu item management table shown in FIG. 6.

FIG. 11A is a view that shows an example of the data structure of the dish management table.

The data structure shown in FIG. 11A provides multiple series of data associated with pieces of dish information and stored in the server storage unit 42. The series of data includes, for example, a birthplace, an ingredient ID, a Japanese dish name, an English dish name, a Chinese dish name, and the like. The above-described series of data is one example, and may include a dish name translated into a language other than Japanese, English or Chinese.

FIG. 11B is a view that shows an example of the data structure of the first ingredient management table.

The data structure shown in FIG. 11B provides multiple series of data associated with ingredient IDs and stored in the server storage unit 42. The series of data includes, for example, an official name ID, a simplified name ID, an official Japanese ingredient name, an official English ingredient name, an official Chinese ingredient name, and the like. The above-described series of data is one example, and may include an official ingredient name translated into a language other than Japanese, English or Chinese. The official English ingredient name and the official Chinese ingredient name are examples of first ingredient name translated information.

FIG. 12 is a view that shows an example of the data structure of the second ingredient management table.

The data structure shown in FIG. 12 provides multiple series of data associated with simplified name IDs and stored in the server storage unit 42. The series of data includes, for example, a simplified Japanese ingredient name, a simplified English ingredient name, a simplified Chinese ingredient name, and the like. The above-described series of data is one example, and may include a simplified ingredient name translated into a language other than Japanese, English or Chinese. The simplified English ingredient name and the simplified Chinese ingredient name are examples of second ingredient name translated information.

FIG. 13 is a view that shows an example of the data structure of the dish menu item management table.

The data structure shown in FIG. 13 provides multiple series of data associated with dish information and stored in the server storage unit 42. The series of data includes, for example, a birthplace, an ingredient ID, facility information, a Japanese dish name, an English dish name, a Chinese dish name, and the like. The above-described series of data is one example, and may include a dish name translated into a language other than Japanese, English or Chinese.

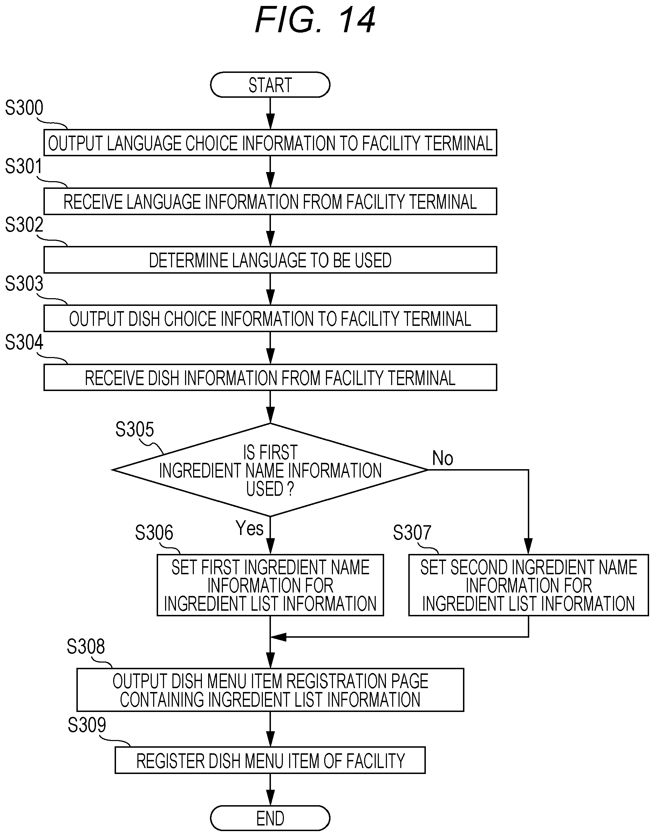

FIG. 14 is a view that shows an example of the flowchart of a dish menu item registration process that is executed by the server 4 in the second embodiment. The processes of step S303 to step S305, step S308 and step S309 of FIG. 14 are similar to the processes of step S100 to step S102, step S105 and step S106 of FIG. 7, so the detailed description is omitted.

The procedure described in the flowchart shown in FIG. 14 is executed by programs prepared in advance and stored in the server storage unit 42 of the server 4.

Initially, as the facility terminal 2 accesses the server 4 in response to administrator's operation, the setting unit 432 of the server 4 outputs language choice information to the facility terminal 2 (step S300). The language choice information is information for selectively displaying multiple languages.

Subsequently, the facility terminal 2 displays the language choice information output from the server 4. As a language that the administrator of the facility terminal 2 uses is selected from among the displayed multiple languages through administrator's operation, the facility terminal 2 transmits language information indicating the selected language to the server 4. The setting unit 432 of the server 4 receives the language information from the facility terminal 2 (step S301).

Subsequently, the setting unit 432 determines to use the first ingredient name translated information corresponding to the received language information as the first ingredient name information and to use the second ingredient name translated information corresponding to the received language information as the second ingredient name information (step S302).

When it is determined in step S305 to use the first ingredient name information, the setting unit 432 sets the first ingredient name information for the ingredient list information (step S306). That is, the first ingredient name translated information corresponding to the language information determined in step S302 is set for the ingredient list information as the first ingredient name information. The setting unit 432 consults the dish management table, and identifies ingredient IDs corresponding to the dish information received in step S304. Subsequently, the setting unit 432 consults the first ingredient management table, and identifies official ingredient names associated with the identified ingredient IDs and corresponding to the language indicated by the language information received in step S301. Subsequently, the setting unit 432 sets the identified official ingredient names for the ingredient list information as the first ingredient name translated information.

On the other hand, when it is determined in step S305 not to use the first ingredient name information but to use the second ingredient name information, the setting unit 432 sets the second ingredient name information for the ingredient list information (step S307). That is, the second ingredient name translated information corresponding to the language information determined in step S302 is set for the ingredient list information as the second ingredient name information. The setting unit 432 consults the dish management table and the first ingredient management table, and identifies simplified name IDs corresponding to the dish information received in step S304. The setting unit 432 consults the second ingredient management table, and identifies simplified ingredient names associated with the identified simplified name IDs and corresponding to the language indicated by the language information received in step S301. Subsequently, the setting unit 432 sets the identified simplified ingredient names for the ingredient list information as the second ingredient name translated information.

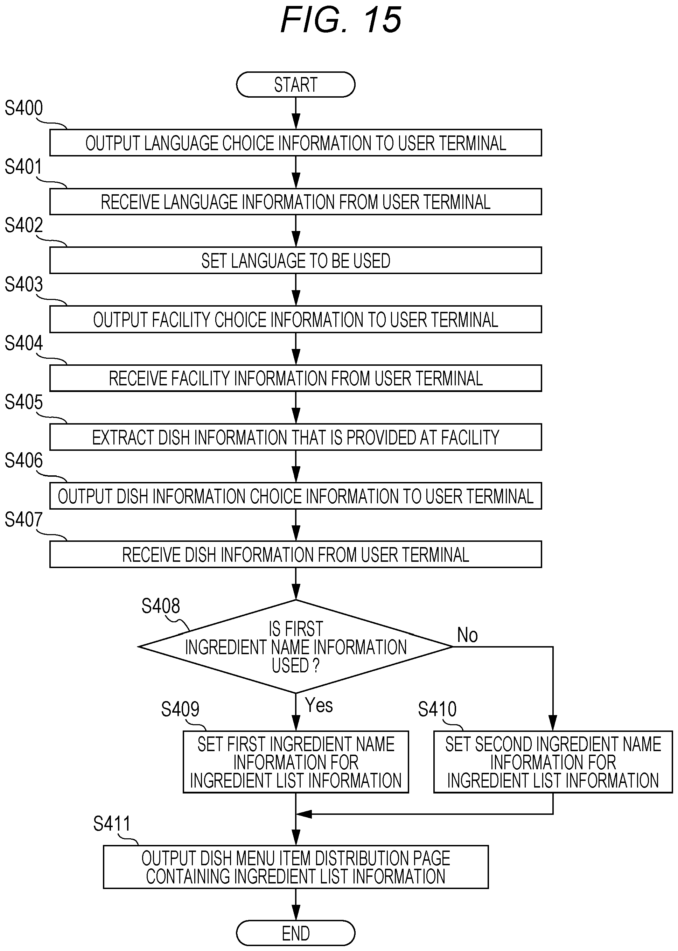

FIG. 15 is a view that shows an example of the flowchart of a dish menu item distribution process that is executed by the server 4 in the second embodiment. The processes of step S403 to step S408, and step S411 of FIG. 15 are similar to the processes of step S200 to step S205, and step S208 of FIG. 8, so the detailed description is omitted.

The procedure described in the flowchart shown in FIG. 15 is executed by programs prepared in advance and stored in the server storage unit 42 of the server 4.

Initially, as the user terminal 3 accesses the server 4 through user's operation, the setting unit 432 of the server 4 outputs language choice information to the user terminal 3 (step S400). The language choice information is information for selectively displaying multiple languages.

Subsequently, the user terminal 3 displays the language choice information output from the server 4. As a language that the user of the user terminal 3 uses is selected from among the displayed multiple languages through user's operation, the user terminal 3 transmits language information indicating the selected language to the server 4. The setting unit 432 of the server 4 receives the language information from the user terminal 3 (step S401).

Subsequently, the setting unit 432 uses the first ingredient name translated information corresponding to the received language information as the first ingredient name information, and determines the second ingredient name translated information corresponding to the received language information as the second ingredient name information (step S402).

When it is determined in step S408 to use the first ingredient name information, the setting unit 432 sets the first ingredient name information for the ingredient list information (step S409). That is, the first ingredient name translated information corresponding to the language information determined in step S402 is set for the ingredient list information as the first ingredient name information. The setting unit 432 consults the dish menu item management table, and identifies ingredient IDs corresponding to the dish information received in step S407. Subsequently, the setting unit 432 consults the first ingredient management table, and identifies official ingredient names associated with the identified ingredient IDs and corresponding to the language indicated by the language information received in step S401. Subsequently, the setting unit 432 sets the identified official ingredient names for the ingredient list information as the first ingredient name translated information.

On the other hand, when it is determined in step S408 not to use the first ingredient name information but to use the second ingredient name information, the setting unit 432 sets the second ingredient name translated information for the ingredient list information (step S410). That is, the second ingredient name translated information corresponding to the language information determined in step S402 is set for the ingredient list information as the second ingredient name information. The setting unit 432 consults the dish menu item management table and the first ingredient management table, and identifies simplified name IDs corresponding to the dish information received in step S407. Subsequently, the setting unit 432 consults the second ingredient management table, and identifies simplified ingredient names associated with the identified ingredient name IDs and corresponding to the language indicated by the language information received in step S401. Subsequently, the setting unit 432 sets the identified simplified ingredient names for the ingredient list information as the second ingredient name translated information.

As described above, the server 4 stores official ingredient names and simplified ingredient names, translated into multiple languages, in the server storage unit 42 in advance, so the setting unit 432 is able to reduce the process of translating ingredient names.

### Third Embodiment

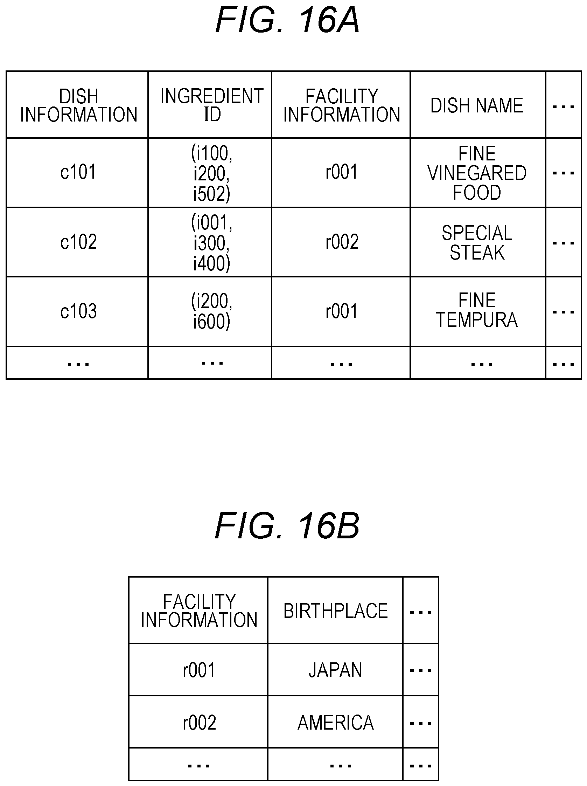

The third embodiment describes the case where the birthplace of a dish is associated with each facility that provides the dish. The configuration of the distribution system 1 in the third embodiment is similar to the configuration of the distribution system 1 in the first embodiment. However, the server 4 stores a dish menu item management table shown in FIG. 16A and a facility management table shown in FIG. 16B in the server storage unit 42 instead of the dish menu item management table shown in FIG. 6.

FIG. 16A is a view that shows an example of the data structure of the dish menu item management table.

The data structure shown in FIG. 16A provides multiple series of data associated with pieces of dish information, each corresponding to a dish menu item that is individually provided at each facility, and stored in the server storage unit 42. The series of data includes, for example, an ingredient ID of each ingredient included in a dish, facility information of a facility that provides a dish, a dish name, and the like. The above-described series of data is one example, and may include another pieces of information regarding a dish menu item. The facility information is, for example, identification information for uniquely identifying a facility. The dish name is the name of a dish, specified by the administrator of the facility terminal 2.

FIG. 16B is a view that shows an example of the data structure of the facility management table.

The data structure shown in FIG. 16B provides multiple series of data associated with facility information of each facility and stored in the server storage unit 42. The series of data includes, for example, a birthplace, and the like. The above-described series of data is one example, and may include another piece of information regarding a facility.

In the third embodiment, the server 4 executes dish menu item registration process in accordance with the flowchart shown in FIG. 7 as in the case of the first embodiment.

However, the determination unit 431 of the server 4 consults the facility management table and identifies the birthplace of a dish that is provided at a facility in the process of step S102 of FIG. 7. The determination unit 431 determines whether to use the first ingredient name information or to use the second ingredient name information by determining whether the facility terminal 2 is located in the identified birthplace.

The registration unit 433 does not store the birthplace in the dish menu item management table in the process of step S106 of FIG. 7. Instead, the server 4 executes the following process before executing the flowchart shown in FIG. 7 for the first time, and registers the birthplace of each dish that is provided at a facility in the facility management table.

Initially, as the facility terminal 2 accesses the server 4 in response to administrator's operation, the setting unit 432 of the server 4 outputs birthplace choice information to the facility terminal 2. The birthplace choice information is information for selectively displaying a plurality of birthplaces.

Subsequently, the facility terminal 2 displays the birthplace choice information output from the server 4. As the birthplace of a dish that is provided at the facility is selected from among the plurality of displayed birthplaces through administrator's operation, the facility terminal 2 transmits birthplace information indicating the selected birthplace to the server 4.

Subsequently, as the birthplace information is received from the facility terminal 2, the setting unit 432 stores the birthplace indicated by the received birthplace information in the facility management table in association with the facility at which the facility terminal that has transmitted the birthplace information is located.

In the third embodiment, the server 4 executes dish menu item distribution process in accordance with the flowchart shown in FIG. 8 as in the case of the first embodiment.

However, in the process of step S205 of FIG. 8, the determination unit 431 of the server 4 consults the facility management table and identifies the birthplace associated with the facility information received in the process of step S202 of FIG. 8. The determination unit 431 determines whether to use the first ingredient name information or to use the second ingredient name information by determining whether the user terminal 3 is located in the identified birthplace.

As described above, since the birthplace of a dish is associated with a facility that provides the dish, the administrator of the facility terminal 2 is allowed to register the birthplace of an original dish.

### Other Embodiments

The facility terminal 2 or the user terminal 3 may transmit country information to the server 4 instead of language information, and the server 4 may identify the native language of the country indicated by the received country information as language information.

The determination unit 431 of the server 4 may set the first ingredient name information or the second ingredient name information, determined to be used in step S102 of FIG. 7, for the ingredient list information, and output the set ingredient list information to the facility terminal 2, without outputting the dish choice information to the facility terminal 2. In this case, the server 4 stores an official ingredient name in the first ingredient management table in association with a classification (a classification of ingredient or seasoning, or a classification of menu item genre (Japanese food, European food, Chinese food, or the like)). The server 4 stores a simplified ingredient name in the second ingredient management table in association with a classification (a classification of ingredient or seasoning, or a classification of menu item genre (Japanese food, European food, Chinese food, or the like)). The determination unit 431 outputs classification choice information to the facility terminal 2, and determines the classification selected by the administrator of the facility terminal 2. Subsequently, the registration unit 433 consults the first ingredient management table and the second ingredient management table, sets the first ingredient name information or second ingredient name information corresponding to the selected classification for the ingredient list information, and outputs a dish menu item registration page containing the set ingredient list information to the facility terminal 2. The classification may be divided into two or more steps, that is, a large classification, a middle classification and a small classification. Thus, the administrator of the facility terminal 2 is allowed to register a menu item of an original dish, not stored in the dish management table, into the dish menu item management table.

The server 4 may store the address of a facility at which the facility terminal 2 is located or the address of the user of the user terminal 3 in the server storage unit 42 in advance, and determine whether the facility terminal 2 or the user terminal 3 is located in the birthplace of a dish on the basis of whether the birthplace coincides with the stored address. In this case, the determination unit 431 of the server 4 determines to use the first ingredient name information when the facility terminal 2 or the user terminal 3 is located in the birthplace, and determines to use the second ingredient name information when the facility terminal 2 or the user terminal 3 is not located in the birthplace.

The determination unit 431 may estimate at least one country in which a language indicated by the language information indicating the language, received from the facility terminal 2 or the user terminal 3 in step S301 of FIG. 14 or step S401 of FIG. 15, is used, as the country in which the facility terminal 2 or the user terminal 3 is located. In this case, the determination unit 431 determines whether the accessing facility terminal 2 or user terminal 3 is located in the birthplace on the basis of whether the estimated country coincides with the birthplace of a dish that is provided at a facility. The determination unit 431 determines to use the first ingredient name information when the accessing facility terminal 2 or user terminal 3 is located in the birthplace, and determines to use the second ingredient name information when the accessing facility terminal 2 or user terminal 3 is not located in the birthplace.

As described above, when country information is used instead of language information, the determination unit 431 may estimate the country indicated by the country information received from the facility terminal 2 or the user terminal 3 as the country in which the facility terminal 2 or the user terminal 3 is located. Food culture significantly varies among countries in which the same language is used (for example, England, America, Australia, and the like), and there are original ingredients in those countries. Therefore, the server 4 is allowed to select ingredient list information further appropriate for the administrator or the user.

To use an official ingredient name or to use a simplified ingredient name may be selected by the administrator of the facility terminal 2 or the user of the user terminal 3.

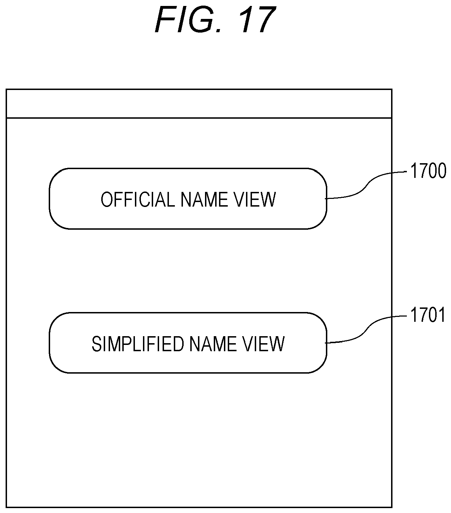

FIG. 17 is a view that shows an example of a selection page that is displayed on the facility terminal 2 or the user terminal 3.

An official name view button 1700 and a simplified name view button 1701 are displayed on the selection page shown in FIG. 17.

When the official name view button 1700 is depressed through administrator's operation or user's operation, the determination unit 431 determines to use the first ingredient name information, and the setting unit 432 automatically sets the first ingredient name information for the ingredient list information. On the other hand, when the simplified name view button 1701 is depressed, the determination unit 431 determines to use the second ingredient name information, and the setting unit 432 automatically sets the second ingredient name information for the ingredient list information.

Thus, even when the facility terminal 2 or the user terminal 3 located in a place other than the birthplace of a dish that is provided at a facility accesses, but when the administrator or the user wants to persist in ingredients included in the dish, the administrator or the user is allowed to know official ingredient names.

Not the identification information of a dish but a dish name may be used as dish information.

Not the identification information of a facility but a facility name may be used as facility information.

A computer program for causing a computer to implement the functions of the server processing unit 43 may be provided such that the computer program is stored in a computer-readable storage medium, such as a magnetic recording medium and an optical recording medium.

Persons skilled in the art understand that various modifications, replacements and changes are allowed to be added to the above-described embodiments without departing from the spirit and scope of the invention.

## Claims

1. A control method for a server including a storage unit, **characterized by** comprising:
storing first ingredient name information and second ingredient name information in the storage unit in association with each other, the first ingredient name information indicating an official ingredient name of at least one ingredient included in a dish in a birthplace of the dish, the second ingredient name information indicating an ingredient name simplified from an official ingredient name of at least one ingredient included in a dish in a birthplace of the dish;
determining whether to use the first ingredient name information or to use the second ingredient name information for an accessing user terminal;
setting the first ingredient name information for ingredient list information of a dish that is provided at a facility when it is determined to use the first ingredient name information, and setting the second ingredient name information for the ingredient list information when it is determined to use the second ingredient name information; and
outputting the ingredient list information to the user terminal.

2. The control method according to claim 1, wherein
in the determination as to usage, selecting, with the user terminal, whether to use the first ingredient name information or to use the second ingredient name information.

3. The control method according to claim 1, further comprising:
storing dish information indicating a dish and a birthplace of the dish in the storage unit in association with each other for each dish that is provided at a facility;
receiving facility information from the accessing user terminal, the facility information indicating a facility about which ingredient list information indicating a list of ingredients included in a dish that is provided at the facility is browsed; and
determining whether the accessing user terminal is located in a birthplace associated with dish information indicating a dish that is provided at a facility indicated by the received facility information, wherein
in the determination as to usage, it is determined to use the first ingredient name information when a user terminal located in the birthplace has accessed, and it is determined to use the second ingredient name information when a user terminal located in a place other than the birthplace has accessed.

4. The control method according to claim 3, wherein
in the determination as to location, it is determined whether the accessing user terminal is located in the birthplace on the basis of terminal information of the accessing user terminal.

5. The control method according to any one of claims 1 to 4, further comprising:
storing a plurality of pieces of first ingredient name translated information in the storage unit, the plurality of pieces of first ingredient name translated information being obtained by translating the first ingredient name information into multiple languages;
storing a plurality of pieces of second ingredient name translated information in the storage unit, the plurality of pieces of second ingredient name translated information being obtained by translating the second ingredient name information into multiple languages; and
receiving country information or language information from the accessing user terminal, the country information indicating a selected country, the language information indicating a selected language, wherein
in the setting of ingredient list information, the first ingredient name translated information corresponding to the received country information or language information is used as the first ingredient name information, and the second ingredient name translated information corresponding to the received country information or language information is used as the second ingredient name information.

6. The control method according to any one of claims 3 to 5, wherein
a birthplace of the dish is associated with the dish that is provided at the facility, and
a place other than the birthplace is all the region other than the associated birthplace.

7. The control method according to claim 1, further comprising:
storing a birthplace of the dish that is provided at the facility in the storage unit in association with the facility for each facility;
receiving facility information from the accessing user terminal, the facility information indicating a facility about which ingredient list information indicating a list of ingredients included in a dish that is provided at the facility is browsed; and
determining whether the accessing user terminal is located in a birthplace associated with the received facility information, wherein
in the determination as to usage, it is determined to use the first ingredient name information when a user terminal located in the birthplace has accessed, and it is determined to use the second ingredient name information when a user terminal located in a place other than the birthplace has accessed.

8. A control program for a server including a storage unit, the control program causing the server to execute:
storing first ingredient name information and second ingredient name information in the storage unit in association with each other, the first ingredient name information indicating an official ingredient name of at least one ingredient included in a dish in a birthplace of the dish, the second ingredient name information indicating an ingredient name simplified from an official ingredient name of at least one ingredient included in a dish in a birthplace of the dish;
determining whether to use the first ingredient name information or to use the second ingredient name information for an accessing user terminal;
setting the first ingredient name information for ingredient list information of a dish that is provided at a facility when it is determined to use the first ingredient name information, and setting the second ingredient name information for the ingredient list information when it is determined to use the second ingredient name information; and
outputting the ingredient list information to the user terminal.

9. A control method for a server including a storage unit, **characterized by** comprising:
storing first ingredient name information and second ingredient name information in the storage unit in association with each other, the first ingredient name information indicating an official ingredient name of at least one ingredient included in a dish in a birthplace of the dish, the second ingredient name information indicating an ingredient name simplified from an official ingredient name of at least one ingredient included in a dish in a birthplace of the dish;
determining whether to use the first ingredient name information or to use the second ingredient name information for an accessing input terminal;
setting the first ingredient name information for ingredient list information of a dish that is provided at a facility when it is determined to use the first ingredient name information, and setting the second ingredient name information for the ingredient list information when it is determined to use the second ingredient name information; and
outputting the ingredient list information to the input terminal.

10. The control method according to claim 9, wherein
in the determination as to usage, selecting, with the input terminal, whether to use the first ingredient name information or to use the second ingredient name information.

11. The control method according to claim 9, further comprising:
storing dish information indicating a dish in the storage unit in association with a birthplace of the dish;
receiving dish information from the accessing input terminal, the dish information being information that the input terminal shows a dish that is provided at a facility; and
determining whether the accessing input terminal is located in a birthplace associated with the received dish information, wherein
in determination as to usage, it is determined to use the first ingredient name information when an input terminal located in the birthplace has accessed, and it is determined to use the second ingredient name information when an input terminal located in a place other than the birthplace has accessed.

12. The control method according to claim 11, wherein
in the determination as to location, it is determined whether the accessing input terminal is located in the birthplace on the basis of terminal information of the accessing input terminal.

13. The control method according to claim 11, further comprising:
storing an address of a facility associated with the input terminal in the storage unit, wherein
in the determination as to location, it is determined whether the accessing input terminal is located in the birthplace on the basis of terminal information of the accessing input terminal.

14. The control method according to any one of claims 11 to 13, wherein
a birthplace of the dish is associated with the dish, and
a place other than the birthplace is all the region other than the associated birthplace.

15. The control method according to claim 9 or 10, further comprising:
selecting, with the input terminal, a birthplace of a dish that is provided at the facility; and
storing a birthplace of a dish that is provided at the selected facility in the storage unit in association with the facility.

16. A control program for a server including a storage unit, the control program causing the server to execute:
storing first ingredient name information and second ingredient name information in the storage unit in association with each other, the first ingredient name information indicating an official ingredient name of at least one ingredient included in a dish in a birthplace of the dish, the second ingredient name information indicating an ingredient name simplified from an official ingredient name of at least one ingredient included in a dish in a birthplace of the dish;
determining whether to use the first ingredient name information or to use the second ingredient name information for an accessing input terminal;
setting the first ingredient name information for ingredient list information of a dish that is provided at a facility when it is determined to use the first ingredient name information, and setting the second ingredient name information for the ingredient list information when it is determined to use the second ingredient name information; and
outputting the ingredient list information to the input terminal.
